# EUROPÄISCHE PATENTANMELDUNG

(11) **EP 1 122 129 A2**
(43) Veröffentlichungstag der Anmeldung: **08.08.2001**
(21) Anmeldenummer: 01101485.9
(22) Anmeldetag: 24.01.2001
(51) Int. Cl.: B60R 5/00

(54) **Anordnung zum Sichern von Gegenständen im Gepäckraum eines Fahrzeugs**

(30) Priorität: 01.02.2000 DE 10004228
(71) Anmelder: Gold, Arno, 97346 Ipfhofen (DE)
(72) Erfinder: Gold, Arno, 97346 Ipfhofen (DE)
(74) Vertreter: Wolf, Eckhard, Dr.-Ing.

(57) **Zusammenfassung**

Die Erfindung betrifft eine Anordnung zum Sichern von Gegenständen im Gepäckraum von Kraftfahrzeugen, insbesondere zum Sichern von Fahrrädern, mit einem vorzugsweise teleskopierbaren, quer zur Fahrzeuglängsachse im Gepäckraum anordbaren langgestreckten Grundträger (10) und mit mindestens einem an dem Grundträger (10) angeordneten Halter für die zu sichernden Gegenstände. Um eine möglichst einfache aber dennoch sichere Befestigung des Grundträgers (10) im Fahrzeug zu ermöglichen, wird gemäß der Erfindung vorgeschlagen, daß der Grundträger (10) mittels mindestens eines Befestigungsteils (12) an einer Rücksitzbank (16) des Fahrzeugs befestigbar ist.

## Beschreibung

Die Erfindung betrifft eine Anordnung zum Sichern von Gegenständen im Gepäckraum von Kraftfahrzeugen, insbesondere zum Sichern von Fahrrädern, mit einem vorzugsweise teleskopierbaren, zur Fahrzeuglängsachse im Gepäckraum anordbaren langgestreckten Grundträger und mit mindestens einem an dem Grundträger angeordneten Halter für die zu sichernden Gegenstände.

Zum Transport von sperrigen Gütern wie Fahrrädern und anderen Sportgeräten oder auch von größeren Musikinstrumenten mit Kraftfahrzeugen sind verschiedene Haltersysteme bekannt. Viele derartige Systeme werden auf der Außenseite des Fahrzeugs, beispielsweise auf dem Dach oder am Heck, angeordnet. Diese Systeme weisen zwar den Vorteil auf, daß der Gepäckraum im Innenraum des Fahrzeugs für andere Gegenstände frei bleibt und daß hinsichtlich der Größe der zu transportierenden Gegenstände weniger Beschränkungen bestehen, andererseits sind sie jedoch auch mit einer Reihe von Nachteilen verbunden. So sind die zu transportierenden Gegenstände, soweit sie nicht in speziellen Transportboxen untergebracht werden, der Witterung ausgesetzt und können dadurch in Mitleidenschaft gezogen werden, und sie sind nur unzureichend gegen Diebstahl gesichert. Weiterhin bestehen bei derartigen Systemen oft Beschränkungen hinsichtlich der zulässigen Fahrgeschwindigkeit und der Treibstoffverbrauch des Fahrzeugs erhöht sich.

Bekannt ist auch ein Fahrradträger für den Transport von Fahrrädern im Innenraum des Fahrzeugs. Dieser besteht im wesentlichen aus einem längenverstellbaren Grundträger, der sich an gegenüberliegenden Seitenwänden des Fahrzeugs abstützt. Auf dem Grundträger können eine oder mehrere Haltevorrichtungen zur Aufnahme der Fahrradgabel oder eines Vorderrades des Fahrrads angeordnet werden. Ein Nachteil dieses Fahrradträgers ist, daß der Grundträger hauptsächlich durch Reibschluß an den seitlichen Fahrzeuginnenwänden fixiert ist und daher verrutschen und die Fahrzeugverkleidung beschädigen oder im Falle eines Unfalls sich gänzlich lösen kann. Weiterhin sind für diesen Träger ebene Anlageflächen für die Abstützfüße des Grundträgers erforderlich, die nicht unbedingt in jedem Fahrzeug vorhanden sind oder nur die Montage an bestimmten Stellen ermöglichen.

Ausgehend hiervon besteht die Aufgabe der vorliegenden Erfindung darin, eine Anordnung der eingangs genannten Art dahingehend zu verbessern, daß bei möglichst einfacher Montage des Trägersystems unter allen Umständen ein sicherer Transport der Gegenstände gewährleistet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von dem Gedanken aus, die in dem Fahrzeug vorhandene Rücksitzbank und insbesondere deren Kopfstützen als Montageort für den Grundträger zu nutzen. Erfindungsgemäß wird daher vorgeschlagen, daß der Grundträger mittels mindestens eines Befestigungsteils an einer Rücksitzbank des Fahrzeugs befestigbar ist. Gemäß einer ersten alternativen Ausgestaltung der Erfindung weist das Befestigungsteil einen auf dem Grundträger längs verschiebbaren Schlitten sowie ein an dem Schlitten quer zum Grundträger angeordnetes Führungsteil mit mindestens einer Durchstecköffnung für eine in die Rücksitzbank des Fahrzeugs einsteckbare Kopfstützenstange auf. Hierzu wird zunächst die Kopfstütze von der Sitzbank entfernt und danach unter Zwischenschaltung des Befestigungsteils wieder in die Sitzbank eingesteckt. Zweckmäßig erfolgt dies auf beiden Seiten des Fahrzeugs.

Gemäß einer weiteren alternativen Ausgestaltung der Erfindung weist das Befestigungsteil einen auf dem Grundträger längs verschiebbaren Schlitten sowie mindestens einen an dem Schlitten angeordneten, in eine in der Rücksitzbank vorgesehene Einstecköffnung für eine Kopfstützenstange einsteckbaren Zapfen auf. In diesem Fall wird die Kopfstütze gänzlich aus der Sitzbank entfernt und statt dessen die Zapfen des Befestigungsteils in die Einstecköffnungen der Kopfstütze eingesteckt. Diese Lösung empfiehlt sich vor allen Dingen für Fahrzeuge, bei denen die Kopfstützen bei umgelegter Sitzbank aus Platzgründen entfernt werden müssen.

In weiterer alternativer Ausgestaltung der Erfindung weist das Befestigungsteil einen auf dem Grundträger längs verschiebbaren Schlitten sowie einen an dem Schlitten angeordneten, eine randoffene Aufnahmeöffnung für eine Kopfstützenstange und einen quer zur Aufnahmeöffnung verschwenkbaren oder verschiebbaren Sicherungsriegel aufweisenden Riegelmechanismus auf, wobei der Sicherungsriegel in einer Endstellung die Aufnahmeöffnung freigibt und in seiner anderen Endstellung eine in die Aufnahmeöffnung eingeführte Kopfstützenstange form- und/oder kraftschlüssig sichert. Bei dieser Lösung ist es nicht erforderlich, die Kopfstützen zur Montage des Haltersystems aus der Sitzbank zu entfernen, was vor allem bei Fahrzeugen mit fest eingebauten Kopfstützen von Vorteil ist.

Grundsätzlich sind die drei genannten Alternativen sowohl in der Normalstellung der Sitzbank als auch bei umgelegter Sitzbank verwendbar.

Um den Grundträger weiter zu sichern, ist es von Vorteil, wenn dieser an seinen Endstirnseiten jeweils einen Befestigungsmechanismus für eine Sicherungslasche eines Sitzgurts des Fahrzeugs aufweist. Dieser kann entweder als Befestigungshaken ausgebildet sein oder eine Gewindebohrung in der Endstirnseite des Grundträgers sowie einen in die Gewindebohrung einschraubbaren Befestigungsbolzen aufweisen. In letzterem Fall wird der Befestigungsbolzen durch die Lasche des Sitzgurts geführt und dann in die Gewindebohrung eingeschraubt, wodurch der Grundträger bei starken Bremsvorgängen oder bei Unfällen sicher gehalten wird.

Der Grundträger kann im wesentlichen rohrförmig oder als Mehrkantprofil, vorzugsweise als Vierkantprofil ausgebildet sein und aus Metall, aus Leichtmetall, vorzugsweise aus Aluminium, oder aus einem Kunststoff bestehen. Insbesondere die Verwendung von Leichtmetall bietet den Vorteil einer hohen Stabilität bei geringem Eigengewicht.

Zweckmäßig umfaßt die Anordnung einen vorzugsweise längs verschiebbar auf dem Grundträger angeordneten Halter für einen zu sichernden Gegenstand, vorzugsweise für die Gabel oder ein Rahmenrohr eines Fahrrads. Soweit der Halter für eine Fahrradgabel bestimmt ist, weist er vorteilhaft ein im Abstand zum Grundträger angeordnetes Kupplungsteil für die Achsaufnahmeöffnungen am freien Ende der Holme der Fahrradgabel auf. Vorzugsweise weist das Kupplungsteil einen Klemmechanismus, vorzugsweise einen Exzenterspanner (Schnellspannverschluß) auf, mit dem die Gabel kraftschlüssig einspannbar ist.

Der Halter weist zweckmäßig einen längs verschiebbar auf dem Grundträger angeordneten Schlitten auf, wobei der Schlitten als Rohr- oder Profilabschnitt ausgebildet sein kann, der den Grundträger formschlüssig umfaßt. Das Kupplungsteil ist mittels eines Verbindungsteils an dem Schlitten befestigt. Im einfachsten Fall ist das Verbindungsteil als mit dem Schlitten einerseits und dem Kupplungsteil andererseits verschweißtes Rechteckblech ausgebildet. Auf diese Weise wird eine starre Verbindung zwischen dem Schlitten und dem Kupplungsteil hergestellt, wobei eine ggf. erwünschte Neigungsänderung des Kupplungsteils nur durch eine Neigungsänderung des gesamten Halter möglich ist, indem dieser beispielsweise um 90° verdreht auf den Grundträger aufgeschoben wird. Bevorzugt weist das Verbindungsteil zwei um eine im wesentlichen quer zur Verschieberichtung des Schlittens ausgerichtete Drehachse gegeneinander verdrehbare Abschnitte auf, von denen der eine mit dem Schlitten und der andere mit dem Kupplungsteil verbunden ist. Die zwei Abschnitte des Verbindungsteils können eine axiale Durchtrittsöffnung, ggf. mit einem Innengewinde versehen, aufweisen und sind mittels einer in Richtung der Drehachse wirkenden Schraubverbindung form- und/oder kraftschlüssig gegeneinander verspannbar. Um unter Krafteinwirkung ein unbeabsichtigtes Verdrehen der beiden Abschnitte gegeneinander zu verhindern, können sie an den axial gegeneinander anliegenden Stirnflächen zueinander komplementäre Verzahnungen aufweisen. Ein derartiges Kupplungsteil weist den Vorteil auf, daß eine darin eingespannte Fahrradgabel bezüglich der Fahrzeuglängsachse verdreht werden kann, so daß damit auch der mit der Gabel verbundene Lenker des Fahrrades in platzsparender Weise in Richtung der Fahrzeuglängsachse ausgerichtet werden kann. Mehrere Fahrräder können auf diese Weise nah nebeneinander angeordnet und transportiert werden, ohne daß deren Lenker demontiert werden müßten.

Zusätzlich kann es von Vorteil sein, wenn sich das Kupplungsteil auch parallel zu der Längsachse des Grundträgers verschwenken läßt, beispielsweise um sich so an die Lage der Aufnahmeöffnungen einer Fahrradgabel eines im Fahrzeug angeordneten Fahrrads anpassen zu lassen. Dies wird bevorzugt dadurch erreicht, daß der mit dem Kupplungsteil verbundene Abschnitt des Verbindungsteils wiederum zwei um eine senkrecht zu der ersten Drehachse ausgerichtete zweite Drehachse gegeneinander verschwenkbare Teilabschnitte aufweist, die ebenso wie die erstgenannten Abschnitte mittels einer in Richtung der zweiten Drehachse wirkenden Schraubverbindung form- und/oder kraftschlüssig gegeneinander verspannbar sein können und deren axial gegeneinander anliegende Stirnflächen zueinander komplementäre Verzahnungen aufweisen können.

Der Halter kann als separates Zubehörteil der Anordnung oder auch einstükkig mit dem Befestigungsteil, mit dem der Grundträger an der Sitzbank des Fahrzeugs befestigt wird, ausgebildet sein.

Bei manchen Fahrzeugen ist es aufgrund deren Innenraumhöhe erforderlich, ein oder auch beide Räder des Fahrrads zum Transport auszubauen und separat zu sichern. Zu diesem Zweck können zwei an dem Halter schwenkbar befestigbare, parallel zueinander angeordnete Haltestreben vorgesehen sein, die im Abstand zum Halter jeweils eine vorzugsweise randoffene Achsaufnahmeöffnung für die Achse eines Rades aufweisen. Das Rad wird in die dafür vorgesehenen Aufnahmeöffnungen mittels der sich meist ohnehin an dem Rad befindliche Schnellspannvorrichtung eingespannt. Zur Sicherung eines weiteren Rades können an den Haltestreben im Bereich ihrer freien Enden zwei zueinander parallele Zusatzstreben befestigt werden, die jeweils im Abstand zu ihren Befestigungspunkten an den Haltestreben eine vorzugsweise randoffene Achsaufnahmeöffnung für die Achse eines weiteren Rades aufweisen. Es versteht sich, daß der Abstand der Achsaufnahmeöffnungen der Haltestreben zum Halter bzw. der Zusatzstreben zu ihren Befestigungspunkten an den Haltestreben größer sein sollte als der Radius des zu sichernden Rades.

Alternativ zu der Sicherung des Rades mittels dessen Gabel ist es möglich, das Fahrrad dadurch zu sichern, daß eine ein Rahmenrohr ergreifende Halterung verwendet wird. Dementsprechend kann der Halter eine Haltestange mit einer im Abstand von dem Grundträger angeordneten Klemmfaust für ein Rahmenrohr eines Fahrrads aufweisen.

In weiterer Ausgestaltung der Erfindung kann der Halter einen schraubstockartigen Klemmechanismus mit einer an einem auf dem Grundträger längs verschiebbar angeordneten Schlitten fest angeordneten ersten Klemmbacke und einer bezüglich dieser mittles einer Gewindespindel verstellbaren zweiten Klemmbacke aufweisen. Der Klemmechanismus kann dabei derart an dem Halter angeordnet sein, daß die Verstellrichtung der zweiten Klemmbacke entweder parallel oder quer zur Längsachse des Grundträgers ausgerichtet ist. Ein solcher Klemmechanismus eignet sich insbesondere zur Aufnahme eines beispielsweise plattenartigen Hilfsträgers, auf oder an dem ein zu sichernder Gegenstand mittels geeigneter Haltemittel wie Spannbändern o. dgl. befestigt wird.

Zum Schutz des Laderaums vor Verschmutzungen kann an dem Grundträger eine lösbar befestigbare Matte aus einem vorzugsweise wasser- und/oder schmutzabweisenden Material vorgesehen sein, wobei die Länge und die Breite der Matte im wesentlichen der Länge und der Breite des Laderaums des Fahrzeugs entsprechen. Die Matte ist vorzugsweise mittels Klettstreifen an dem Grundträger befestigt und läßt sich zum Transport bei Nichtbenutzung aufrollen. Vorteilhafterweise ist die Länge der Matte etwas größer als die des Laderaums des Fahrzeugs, so daß die ausgerollte Matte bei geöffneter Heckklappe des Fahrzeugs über dessen Stoßstange bzw. Heckverkleidung hinausragt. Insbesondere Fahrzeuge mit lackierten Stoßfängern werden so vor Beschädigungen beim Einladen der Gegenstände geschützt.

Eine zusätzliche Sicherung des Grundträgers kann dadurch erreicht werden, daß an diesem ein Sicherungsband aus reißfestem Material befestigt wird, dessen freies Ende im Heckbereich des Fahrzeugs festlegbar ist. Vorzugsweise weist das Sicherungsband an seinem freien Ende eine Verdickung auf, die beispielsweise durch eine Schlaufe und ein in der Schlaufe angeordnetes Rundstück aus Metall oder einem Kunststoff gebildet sein kann und die bei geschlossener Heckklappe des Fahrzeugs außerhalb des Fahrzeugs angeordnet wird. Das Sicherungsband wird dann zwischen der Heckklappe und dem Heckklappenrahmen eingeklemmt, wodurch eine Sicherung des Grundträgers in Fahrtrichtung erreicht wird. Bevorzugt wird je ein derartiges Sicherungsband auf beiden Längsseiten der Anordnung eingesetzt.

Eine Alternative der Erfindung ist für Fahrzeuge bestimmt, bei denen mindestens zwei hintere Sitzreihen vorhanden sind, die sich komplett aus dem Fahrzeug entfernen lassen. In diesem Fall wird der Grundträger mittels mindestens eines Befestigungsteils an mindestens einem in Fahrzeuglängsrichtung angeordneten Hilfsträger befestigt, der wiederum an den Sitzbankbefestigungspunkten im Boden des Fahrzeugs befestigbar ist. Für die Befestigung der Hilfsträger, von denen zweckmäßig jeweils einer an beiden Längsseiten des Fahrzeugs angeordnet wird, eignet sich insbesondere der bereits oben beschriebene Riegelmechanismus. Im übrigen lassen sich auf dem Grundträger die bereits beschriebenen Gabel-, Rad- und Rahmenhalter anordnen.

Im folgenden wird die Erfindung anhand von in der Zeichnung dargestellten Ausführungsbeispielen näher erläutert. Es zeigt
- Fig. 1: eine erste Variante der erfindungsgemäßen Anordnung, bei der Kopfstützenstangen zur Befestigung des Grundträgers durch ein auf dem Grundträger angeordnetes Befestigungsteil hindurchgesteckt werden,
- Fig. 2 a bis d: verschiedene Detailansichten der Anordnung gemäß Fig. 1 mit einem Halter für eine Fahrradgabel sowie eine Variante des Befestigungsteils;
- Fig. 3 a und b: ein Längs- und ein Querschnitt durch den Halter gemäß Fig. 2 in vergrößerter Darstellung;
- Fig. 4 a und b: ein weiteres Ausführungsbeispiel eines Halters mit einem um zwei Achsen verschwenkbaren Kupplungsteil;
- Fig. 5 a und b: zwei Varianten des Befestigungsteils gemäß Fig. 1;
- Fig. 6 a und b: eine Seitenansicht und eine Draufsicht auf einen Haltermechanismus für Fahrradräder;
- Fig. 7 a und b: einen Riegelmechnismus zur Befestigung des Grundträgers an Kopfstützenstangen bzw. von Hilfsträgern an Sitzbankbefestigungspunkten in geschlossener und geöffneter Stellung;
- Fig. 8: eine Variante der Erfindung, bei der der Grundträger an Hilfsträgem, die an Sitzbankbefestigungspunkten im Fahrzeugboden verankert werden, befestigt wird und ein Halter für eine Fahrradrahmenstange; und
- Fig. 9 a und b: ein weiteres Ausführungsbeispiel eines Halters mit einem schraubstockartigen Klemmechanismus.

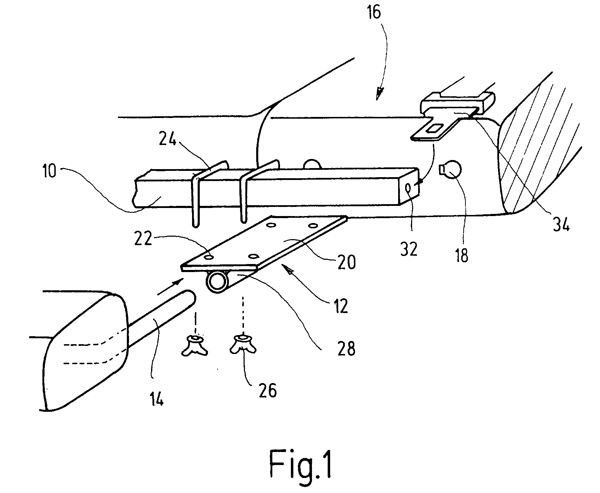

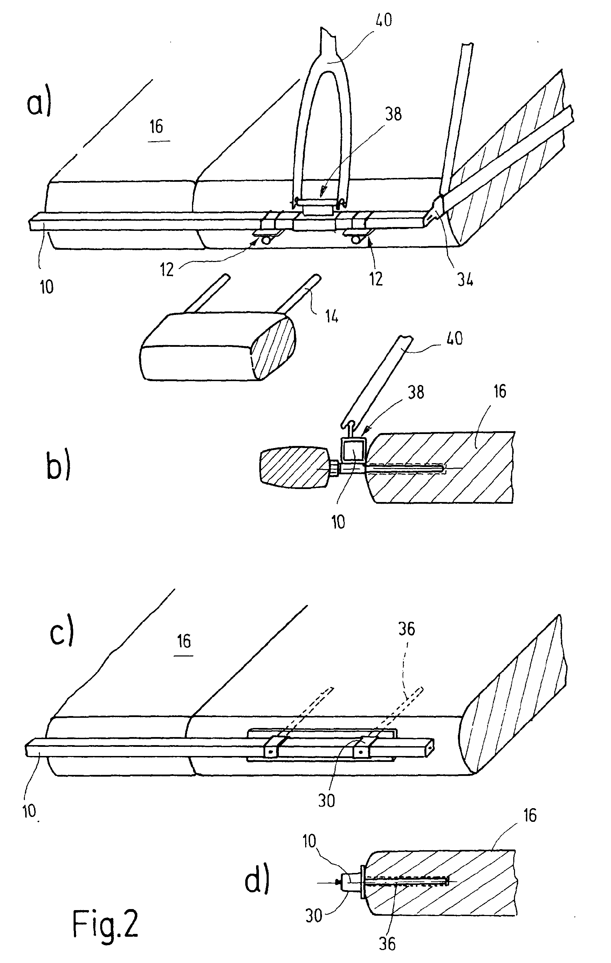

Die Fig. 1 und 2 zeigen eine Anordnung zum Sichern von Gegenständen im Gepäckraum eines Kraftfahrzeugs, die im wesentlichen aus einem Grundträger 10 und einem Befestigungsteil 12 besteht, wobei der Grundträger 10 mittels des Befestigungsteils 12 unter Verwendung der Kopfstützen bzw. Kopfstützenstangen 14 (Fig. 1, Fig. 2 a, b) an der - in der Zeichnung in ihrer nach vorne umgeklappten Stellung dargestellten- Rücksitzbank 16 des Fahrzeugs befestigt wird. Alternativ (Fig. 2 c, d) werden die Einstecköffnungen 18 der Kopfstützen zur Befestigung des Grundträgers 10 verwendet.

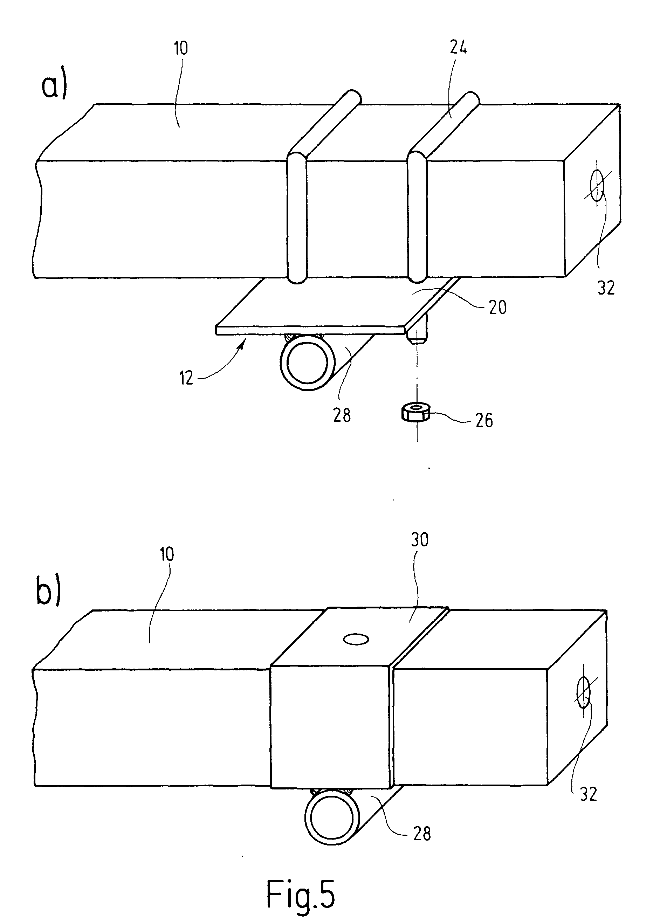

Das in Fig. 1 und 5 a dargestellte Befestigungsteil 12 besteht aus einer rechteckigen oder quadratischen Trägerplatte 20, die im Bereich ihrer Ecken Durchstecköffnungen 22 für die Schenkel zweier U-förmiger Befestigungselemente 24 aufweist. Die freien Enden der Schenkel weisen ein Außengewinde auf, so daß die Trägerplatte mittels Muttern oder Flügelmuttern 26 an dem Grundträger 10 festgeklemmt werden kann. Auf der dem Grundträger 10 abgewandten Seite weist die Trägerplatte einen quer zum Grundträger ausgerichteten Rohrabschnitt 28 auf, durch den hindurch die Kopfstützenstange 14 in die Einstecköffnungen 18 der Rücksitzbank 16 eingesteckt werden kann. Alternativ (Fig. 5 b) kann der Rohrabschnitt 28 auch an einem als Hohlprofil ausgebildeten Schlitten 30 angeordnet sein, der formschlüssig auf den Grundträger 10 aufgeschoben wird.

Wie in Fig. 1 und 2 a dargestellt, kann der Grundträger 10 zusätzlich durch die im Fahrzeug vorhandenen Sitzgurte gesichert werden. Hierzu ist in den Längsstirnseiten des Grundträgers 10 jeweils eine Gewindebohrung 32 vorgesehen, so daß sich die Lasche 34 des Sitzgurts mittels eines (nicht dargestellten) Sicherungsbolzens an dem Grundträger 10 befestigen läßt. Beim scharfen Abbremsen des Fahrzeugs oder bei Auffahrunfällen wird hierdurch der Grundträger und damit auch die an diesem befestigten Gegenstände zuverlässig zurückgehalten.

Bei dem Ausführungsbeispiel gemäß Fig. 2 c und d weist das Befestigungsteil 12 keine Durchstecköffnung für die Kopfstützenstangen auf, vielmehr sind Zapfen 36 an dem Schlitten 30 vorgesehen, die an Stelle der Kopfstützenstangen in die Einstecköffnungen 18 eingesetzt werden. Diese Variante bietet sich vor allem für Fahrzeuge an, bei denen aus Platzgründen die Kopfstützen bei umgelegter Sitzbank ganz entfernt werden müssen.

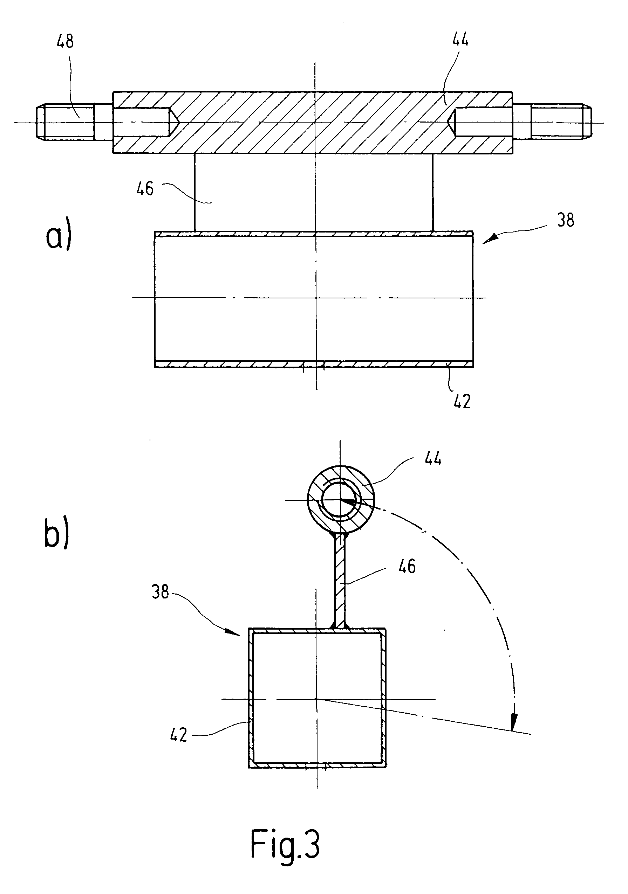

In Fig. 2 a und b ist weiterhin ein auf den Grundträger 10 aufgeschobener Halter 38 dargestellt, der in Fig. 3 a und b in einem Längs- und einem Querschnitt vergrößert gezeigt ist. Der Halter ist zur Aufnahme einer Fahrradgabel 40 bestimmt und besteht aus einem als quadratisches Hohlprofil ausgebildeten Schlitten 42, der formschlüssig auf den Grundträger 10 aufgeschoben werden kann, sowie einem Kupplungsteil 44, das mittels eines Rechteckblechs 46 an dem Schlitten 42 befestigt ist. Das Kupplungsteil 44 weist an seinen Längsstirnseiten jeweils einen Gewindebolzen 48 auf, der in die randoffenen Achsaufnahmeöffnungen am freien Ende der Holme der Fahrradgabel 40 eingreift, wobei die Fahrradgabel dann durch nicht dargestellte, auf die Gewindebolzen 48 aufschraubbare Muttern oder Flügelmuttern gesichert wird. Alternativ kann das Kupplungsteil 44 auch eine axial durchgehende Bohrung aufweisen, durch die eine Achse mit einem Schnellspannverschluß, wie er auch am Fahrrad zur Befestigung der Räder verwendet wird, durchgesteckt werden kann. Der Schlitten 42 kann entweder so auf den Grundträger 10 aufgeschoben werden, daß das Kupplungsteil 44 im wesentlichen senkrecht nach oben ausgerichtet ist, oder daß das Kupplungsteil 44 im wesentlichen horizontal in Fahrtrichtung ausgerichtet ist. Hierdurch läßt sich die Anordnung an die gegebenen Platzverhältnisse bzw. Größe des Fahrrads anpassen.

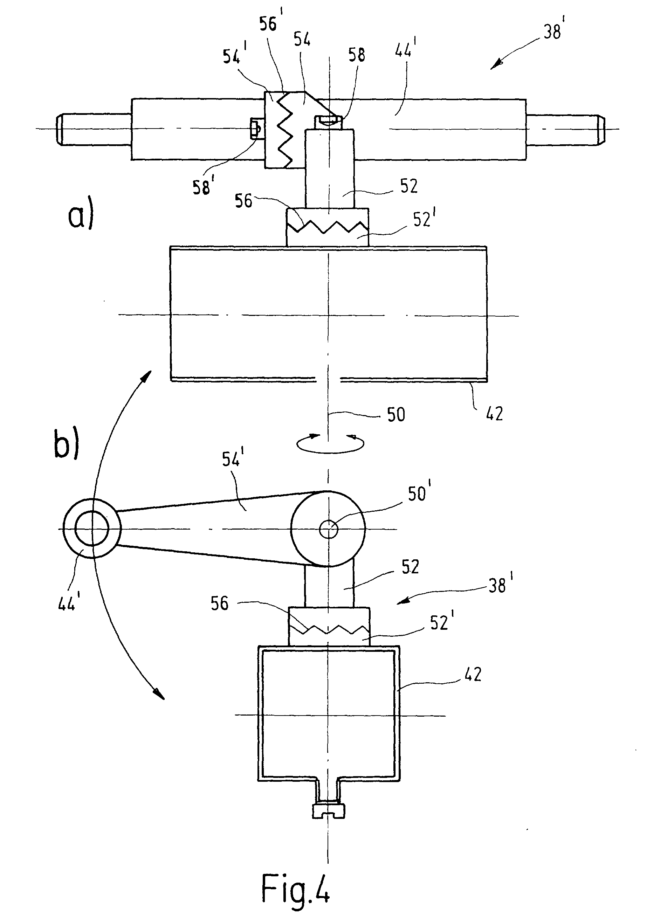

Ein weiteres Ausführungsbeispiel eines Halters 38' für eine Fahrradgabel ist in Fig. 4 a und b dargestellt. Das Kupplungsteil 44' ist hier an einem Verbindungsteil zum Schlitten 42 befestigt, das aus mehreren, um zueinander senkrechte Achsen 50, 50' verschwenkbaren Abschnitten 52, 52' bzw. 54, 54' besteht. Diese weisen an ihren gegeneinander anliegenden Stirnseiten zueinander komplementäre Verzahnungen 56, 56' auf, so daß sich die Abschnitte in einer gewünschten Winkelstellung mittels axial durch die Abschnitte hindurchgreifende Halteschrauben 58, 58' fixieren lassen. Hierdurch läßt sich nicht nur eine gewünschte Neigung des Kupplungsteils 44 einstellen, sondern das Kupplungsteil 44' läßt sich auch seitlich verschwenken, so daß eine daran befestigte Fahrradgabel ebenfalls in einer seitlich verschwenkten Stellung gehalten wird. Dies wiederum bewirkt, daß der starr mit der Gabel 40 verbundene Fahrradlenker ebenfalls in Richtung der Fahrzeuglängsachse verschwenkt wird, so daß sich mehrere Fahrräder in platzsparender Weise nebeneinander anordnen lassen, ohne daß deren Lenker entfernt werden müßten.

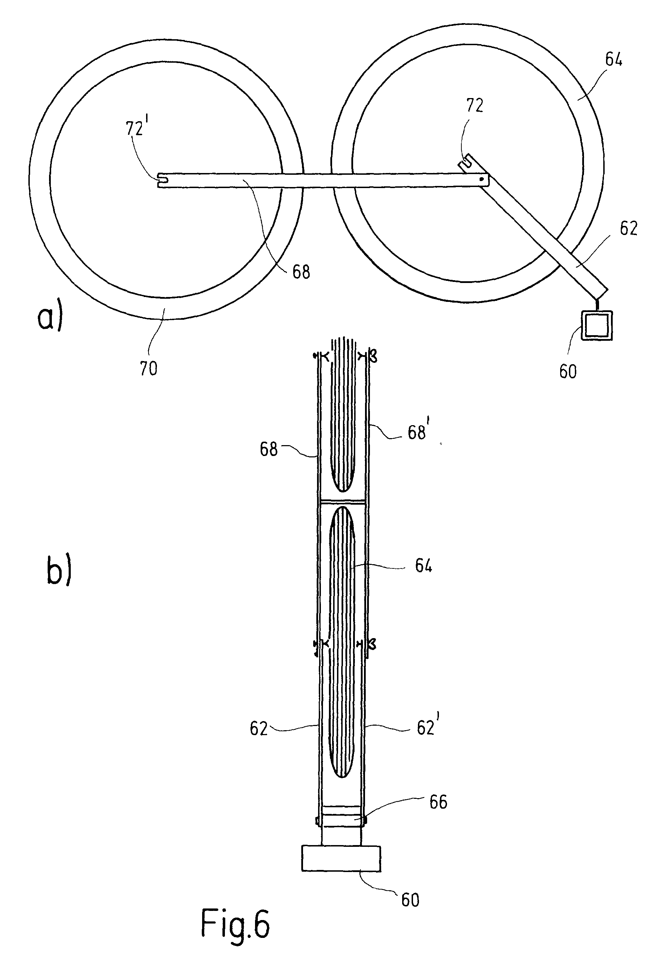

Ein Halter für einzelne Räder ist in Fig. 6 a und b in einer Seitenansicht und einer Ansicht von oben dargestellt. Hier sind an einem Schlitten 60 parallel zueinander angeordnete Haltestreben 62, 62' zur Befestigung eines Rades 64 schwenkbar an einem Kupplungsteil 66 und wahlweise zusätzliche Zusatzstreben 68, 68' zur Befestigung eines weiteren Rades 70 schwenkbar an den Haltestreben 62, 62' befestigt. Die Haltestreben 62, 62' bzw. Zusatzstreben 68, 68' weisen an ihrem freien Ende jeweils randoffene Ausnehmungen 72, 72' auf, die die Achsen der Räder 64, 70 aufnehmen.

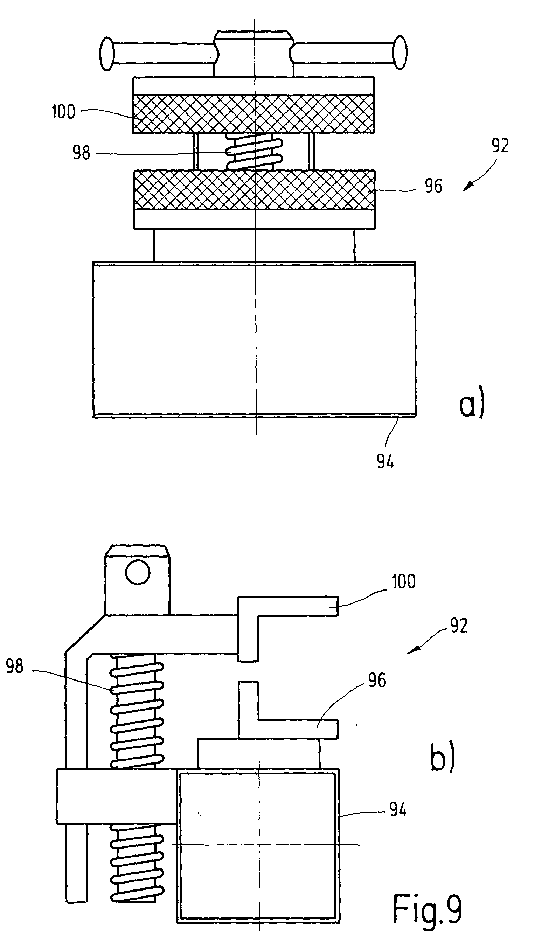

Eine weitere Variante eines Halters 92 ist in Fig. 9 a und b in einer Vorderansicht und einer Seitenansicht dargestellt. Dieser Halter besteht im wesentlichen aus einem Schlitten 94 mit einem daran angeordneten schraubstockartigen Klemmechanismus, der eine fest an dem Schlitten 94 angeordnete erste Klemmbacke 96 sowie eine mittels eines Spindeltriebs 98 bezüglich dieser verstellbare zweite Klemmbacke 100 aufweist. Im dargestellten Ausführungsbeispiel ist der Klemmechanismus im wesentlichen quer zur Längsachse der Grundträgers 10 ausgerichtet, er kann jedoch auch parallel zu diesem ausgerichtet sein. Dieser Halter 92 eignet sich insbesondere zur Aufnahme eines nicht dargestellten, beispielsweise plattenförmigen Hilfsträgers, an dem ein zu sichernder Gegenstand mittels geeigneter Haltemittel, z.B. Spannbändem o. dgl., befestigt wird.

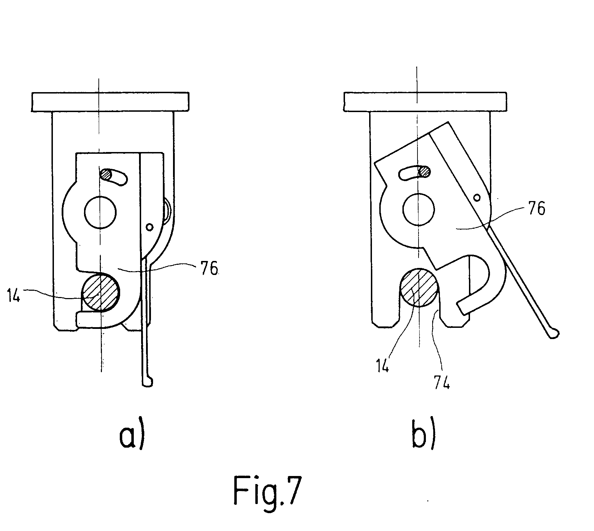

Fig. 7 stellt einen Riegelmechanismus zur Befestigung eines Befestigungsteils an den Kopfstützenstangen 14 dar. Bei Verwendung dieses Riegelmechanismusses ist es nicht erforderlich, die Kopfstützen von der Rücksitzbank zu entfernen. Der Riegelmechanismus weist eine randoffene Aufnahmeöffnung 74 für die Kopfstützenstange 14 sowie einen quer zur Aufnahmeöffnung 74 verschwenkbaren Sicherungsriegel 76 auf. In der in Fig. 7 a dargestellten Schließstellung des Riegelmechanismusses rastet der Sicherungsriegel 76 ein, um ein unbeabsichtigtes Öffnen zu verhindern.

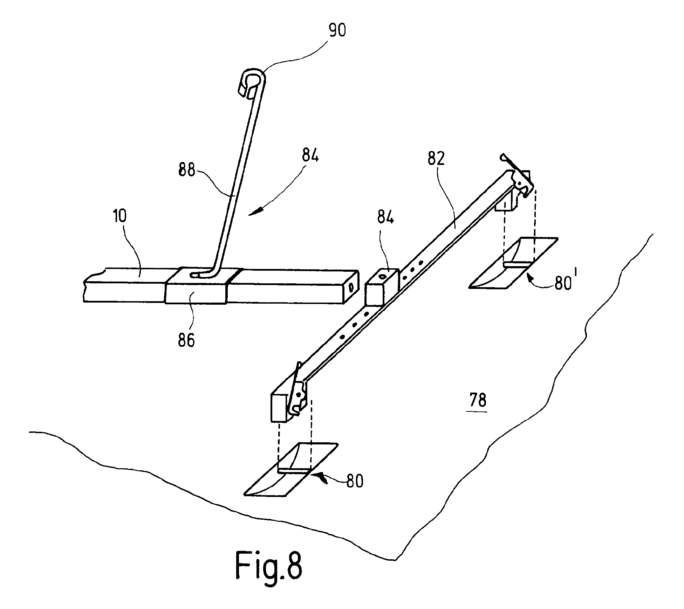

In Fig. 8 ist eine alternative Befestigungsmöglichkeit für den Grundträger 10 dargestellt. Diese Lösung ist insbesondere für Großraumfahrzeuge gedacht, bei denen sich zwei hintere Sitzbänke gänzlich aus dem Fahrzeug entfernen lassen. Im Fahrzeugboden 78 sind dann Sitzbankbefestigungspunkte 80, 80' freigelegt, an denen in Fahrzeuglängsrichtung auf beiden Fahrzeugseiten jeweils ein Hilfsträger 82 befestigt wird, der ein längs verstellbares Befestigungsteil 84 für den Grundträger 10 aufweist. Die Befestigung der Hilfsträger 82 an den Sitzbankbefestigungspunkten 80, 80' kann beispielsweise mittels eines Riegelmechanismusses wie in Fig. 7 dargestellt erfolgen. Der in Fig. 8 dargestellte Grundträger 10 trägt einen weiteren Halter 84, der aus einem auf dem Grundträger 10 längs verschiebbaren Schlitten 86 mit einer daran befestigten Halterstange 88 für ein Rahmenrohr eines Fahrrads aufweist. Am freien Ende der Halterstange 88 ist eine Klemmfaust 90 angeordnet, in der sich das Rahmenrohr einspannen läßt.

Zusammenfassend ist folgendes festzuhalten:
Die Erfindung betrifft eine Anordnung zum Sichern von Gegenständen im Gepäckraum von Kraftfahrzeugen, insbesondere zum Sichern von Fahrrädern, mit einem vorzugsweise teleskopierbaren, quer zur Fahrzeuglängsachse im Gepäckraum anordbaren langgestreckten Grundträger 10 und mit mindestens einem an dem Grundträger 10 angeordneten Halter 38, 38', 84 für die zu sichernden Gegenstände. Um eine möglichst einfache aber dennoch sichere Befestigung des Grundträgers 10 im Fahrzeug zu ermöglichen, wird gemäß der Erfindung vorgeschlagen, daß der Grundträger 10 mittels mindestens eines Befestigungsteils 12 an einer Rücksitzbank des Fahrzeugs befestigbar ist.

## Patentansprüche

1. Anordnung zum Sichern von Gegenständen im Gepäckraum von Kraftfahrzeugen, insbesondere zum Sichern von Fahrrädern, mit einem vorzugsweise teleskopierbaren, quer zur Fahrzeuglängsachse im Gepäckraum anordbaren langgestreckten Grundträger (10) und mit mindestens einem an dem Grundträger angeordneten Halter (38, 38', 84) für die zu sichernden Gegenstände, **dadurch gekennzeichnet,** daß der Grundträger (10) mittels mindestens eines Befestigungsteils (12) an einer Rücksitzbank (16) des Fahrzeugs befestigbar ist.

2. Anordnung nach Anspruch 1, **dadurch gekennzeichnet,** daß das Befestigungsteil (12) einen auf dem Grundträger (10) längs verschiebbaren Schlitten (20, 24; 30) sowie ein an dem Schlitten quer zum Grundträger (10) angeordnetes Führungsteil (28) mit mindestens einer Durchstecköffnung für eine in die Rücksitzbank (16) des Fahrzeugs einsteckbare Kopfstützenstange (14) aufweist.

3. Anordnung nach Anspruch 1, **dadurch gekennzeichnet,** daß das Befestigungsteil (12) einen auf dem Grundträger (10) längs verschiebbaren Schlitten (20, 24; 30) sowie mindestens einen an dem Schlitten angeordneten, in eine in der Rücksitzbank (16) vorgesehene Einstecköffnung (18) für eine Kopfstützenstange einsteckbaren Zapfen (36) aufweist.

4. Anordnung nach Anspruch 1, **dadurch gekennzeichnet,** daß das Befestigungsteil (12) einen auf dem Grundträger (10) längs verschiebbaren Schlitten sowie einen an dem Schlitten angeordneten, eine randoffene Aufnahmeöffnung (74) für eine Kopfstützenstange (14) und einen quer zur Aufnahmeöffnung verschwenkbaren oder verschiebbaren Sicherungsriegel (76) aufweisenden Riegelmechanismus, wobei der Sicherungsriegel (76) in einer Endstellung die Aufnahmeöffnung (74) freigibt und in seiner anderen Endstellung eine in die Aufnahmeöffnung eingeführte Kopfstützenstange (14) form- und/oder kraftschlüssig sichert.

5. Anordnung nach einem der Ansprüche 1 bis 4, **dadurch gekennzeichnet,** daß der Grundträger (10) an seinen Endstirnseiten jeweils ein Befestigungsorgan (32) für eine Sicherungslasche eines Sitzgurts des Fahrzeugs aufweist.

6. Anordnung nach Anspruch 5, **dadurch gekennzeichnet,** daß das Befestigungsorgan eine Gewindebohrung (32) in der Endstirnseite des Grundträgers (10) und einen in die Gewindebohrung einschraubbaren Befestigungsbolzen aufweist.

7. Anordnung nach Anspruch 5, **dadurch gekennzeichnet,** daß das Befestigungsorgan einen an der Endstirnseite des Grundträgers (10) angeordneten Befestigungshaken aufweist.

8. Anordnung nach einem der Ansprüche 1 bis 7, **dadurch gekennzeichnet,** daß der Grundträger (10) im wesentlichen rohrförmig oder als Mehrkantprofil, vorzugsweise als Vierkantprofil, ausgebildet ist.

9. Anordnung nach einem der Ansprüche 1 bis 8, **dadurch gekennzeichnet,** daß der Grundträger (10) aus Leichtmetall, vorzugsweise aus Aluminium, oder aus einem Kunststoff besteht.

10. Anordnung nach einem der Ansprüche 1 bis 9, **dadurch gekennzeichnet,** daß der Halter (38, 38', 84) längs verschiebbar auf dem Grundträger (10) angeordnet ist.

11. Anordnung nach Anspruch 10, **dadurch gekennzeichnet,** daß der Halter (38, 38', 84) ein im Abstand zum Grundträger (10) angeordnetes Kupplungsteil (44, 44') für Achsaufnahmeöffnungen am freien Ende der Holme einer Fahrradgabel (40) aufweist.

12. Anordnung nach Anspruch 11, **dadurch gekennzeichnet,** daß das Kupplungsteil (44, 44') einen Klemmechanismus, vorzugsweise einen Exzenterspanner (Schnellspannverschluß) aufweist, mittels dem die Fahrradgabel (40) kraftschlüssig einspannbar ist.

13. Anordnung nach einem der Ansprüche 10 bis 12, **dadurch gekennzeichnet,** daß der Halter (38, 38', 84) einen längs verschiebbar auf dem Grundträger (10) angeordneten Schlitten (42, 86) aufweist.

14. Anordnung nach Anspruch 13, **dadurch gekennzeichnet,** daß der Halter (38, 38', 84) ein den Schlitten (42) und das Kupplungsteil (44, 44') miteinander verbindendes Verbindungsteil (46; 52, 52', 54, 54') aufweist.

15. Anordnung nach Anspruch 14, **dadurch gekennzeichnet,** daß das Verbindungsteil als mit dem Schlitten (42) einerseits und dem Kupplungsteil (44) andererseits verschweißtes Blechteil (46) ausgebildet ist.

16. Anordnung nach Anspruch 14, **dadurch gekennzeichnet,** daß das Verbindungsteil zwei um eine im wesentlichen quer zur Verschieberichtung des Schlittens (42) ausgerichtete Drehachse (50) gegeneinander verdrehbare Abschnitte (52, 52') aufweist, von denen der eine mit dem Schlitten (42) und der andere mit dem Kupplungsteil (44') verbunden ist.

17. Anordnung nach Anspruch 16, **dadurch gekennzeichnet,** daß die zwei Abschnitte (52, 52') des Verbindungsteils mittels einer in Richtung der Drehachse (50) wirkenden Schraubverbindung (58) form- und/oder kraftschlüssig gegeneinander verspannbar sind.

18. Anordnung nach Anspruch 17, **dadurch gekennzeichnet,** daß die zwei Abschnitte (52, 52') des Verbindungsteils axial gegeneinander anliegende Stirnflächen aufweisen, die vorzugsweise zueinander komplementäre Verzahnungen (56) aufweisen.

19. Anordnung nach einem der Ansprüche 16 bis 18, **dadurch gekennzeichnet,** daß der mit dem Kupplungsteil (44') verbundene Abschnitt (54') des Verbindungsteils zwei um eine senkrecht zu der ersten Drehachse (50) ausgerichtete zweite Drehachse (50') gegeneinander verschwenkbare Teilabschnitte (54, 54') aufweist.

20. Anordnung nach Anspruch 19, **dadurch gekennzeichnet,** daß die zwei Teilabschnitte (54, 54') mittels einer in Richtung der zweiten Drehachse (50') wirkenden Schraubverbindung (58') form- und/oder kraftschlüssig gegeneinander verspannbar sind.

21. Anordnung nach Anspruch 20, **dadurch gekennzeichnet,** daß die zwei Teilabschnitte (54, 54') axial gegeneinander anliegende Stirnflächen aufweisen, die vorzugsweise zueinander komplementäre Verzahnungen (56') aufweisen.

22. Anordnung nach einem der Ansprüche 10 bis 21, **dadurch gekennzeichnet,** daß der Halter (38, 38', 84) einstückig mit dem Befestigungsteil (12) ausgebildet ist.

23. Anordnung nach einem der Ansprüche 10 bis 22, **gekennzeichnet durch** zwei an dem Halter (60, 66) schwenkbar befestigbare, parallel zueinander angeordnete Haltestreben (62, 62'), die im Abstand zum Halter jeweils eine vorzugsweise randoffene Ausnehmung (72) für die Achse eines Rades (64) aufweisen.

24. Anordnung nach Anspruch 23, **dadurch gekennzeichnet,** daß an den Haltestreben (62, 62') im Bereich ihrer freien Enden zwei zueinander parallele Zusatzstreben (68, 68') befestigbar sind, die im Abstand von ihren Befestigungspunkten an den Haltestreben jeweils eine vorzugsweise randoffene Ausnehmung (72') für die Achse eines weiteren Rades (70) aufweisen.

25. Anordnung nach einem der Ansprüche 10 bis 24, **dadurch gekennzeichnet,** daß der Halter (84) eine Halterstange (88) mit einer im Abstand von dem Grundträger (10) angeordneten Klemmfaust (90) für ein Rahmenrohr eines Fahrrads aufweist.

26. Anordnung nach einem der Ansprüche 1 bis 25, **dadurch gekennzeichnet,** daß der Halter einen schraubstockartigen Klemmechanismus mit einer fest an einem Schlitten angeordneten ersten Klemmbacke und einer bezüglich dieser mittels einer Gewindespindel verstellbaren zweiten Klemmbacke aufweist.

27. Anordnung nach einem der Ansprüche 1 bis 26, **gekennzeichnet durch** eine an dem Grundträger (10) lösbar befestigbare Matte aus einem vorzugsweise wasser- und/oder schmutzabweisenden Material, wobei die Länge und die Breite der Matte im wesentlichen der Länge und der Breite des Laderaums des Fahrzeugs entsprechen.

28. Anordnung nach einem der Ansprüche 1 bis 27, **gekennzeichnet durch** mindestens ein an seinem einen Ende an dem Grundträger (10) angeordnetes Sicherungsband aus reißfestem Material, dessen freies Ende im Heckbereich des Fahrzeugs festlegbar ist.

29. Anordnung nach Anspruch 28, **dadurch gekennzeichnet,** daß das Sicherungsband an seinem freien Ende eine Verdickung aufweist, die bei geschlossener Hecklappe des Fahrzeugs außerhalb des Fahrzeugs angeordnet ist.

30. Anordnung nach Anspruch 29, **dadurch gekennzeichnet,** daß die Verdickung durch eine Schlaufe des Sicherungsbandes und ein in der Schlaufe angeordnetes Rundstück aus Metall oder einem Kunststoff gebildet ist.

31. Anordnung zum Sichern von Gegenständen im Gepäckraum von Kraftfahrzeugen, insbesondere zum Sichern von Fahrrädern, mit einem vorzugsweise teleskopierbaren, quer zur Fahrzeuglängsachse im Gepäckraum anordbaren langgestreckten Grundträger (10) und mit mindestens einem an dem Grundträger (10) angeordneten Halter für die zu sichernden Gegenstände, **dadurch gekennzeichnet,** daß der Grundträger (10) mittels mindestens eines Befestigungsteils (84) an mindestens einem in Fahrzeuglängsrichtung angeordneten Hilfsträger (82) befestigbar ist.

32. Anordnung nach Anspruch 31, **dadurch gekennzeichnet,** daß der Hilfsträger (82) an Sitzbankbefestigungspunkten (80) im Boden (78) des Fahrzeugs befestigbar ist.

33. Anordnung nach Anspruch 31 oder 32, **dadurch gekennzeichnet,** daß der Hilfsträger (82) mittels eines eine randoffene Aufnahmeöffnung für einen Sitzhaltestift im Boden (78) des Fahrzeugs und einen quer zur Aufnahmeöffnung verschwenkbaren oder verschiebbaren Sicherungsriegel aufweisenden Riegelmechanismusses an den Sitzbankbefestigungspunkten (80) befestigbar ist, wobei der Sicherungsriegel in einer Endstellung die Aufnahmeöffnung freigibt und in seiner anderen Endstellung einen in die Aufnahmeöffnung eingeführten Sitzhaltestift form- und/oder kraftschlüssig sichert.
